# EUROPEAN PATENT APPLICATION

(11) **EP 1 713 024 A1**
(43) Date of publication of application: **18.10.2006**
(21) Application number: 05252341.2
(22) Date of filing: 14.04.2005
(51) Int. Cl.: G06K 19/077, H01M 4/00

(54) **A card, a method of manufacturing the card, and a thin type battery for the card**

(71) Applicant: NGK Spark Plug Co., Ltd., Nagoya-shi, Aichi-ken (JP)
(72) Inventor: Goto, Tomohisa, Iwakura, Aichi (JP); Harada, Sadamitsu, Kakamigahara, Gihu (JP)
(74) Representative: Brown, Kenneth Richard

(57) **Abstract**

The invention provides a method of manufacturing a battery built-in type IC card which strongly resists seal breakdown of the battery in a heating and laminating process. The manufacturing method of the invention comprises a battery accommodating step of accommodating a thin type battery (1) in a cavity (79). The cavity (79) for accommodating the battery is formed by overlaying an inner sheet (73) and a first oversheet (74) on a core sheet (72) having a penetration hole (79a). A heating and laminating step involves pressing and heating from above and beneath by disposing a second oversheet (75) so as to put a lid on the cavity (79) and adhering mutually. A spacer (25) is inserted between the seal section (11) of the thin type battery (1) and second oversheet (75), and the heating and laminating step is executed so that the pressing force may be applied to the seal section (11) by way of the spacer (25).

## Description

### BACKGROUND OF THE INVENTION

### 1. Field of the Invention

The present invention relates to a card, manufacturing method of a card, and a thin type battery for a card.

### 2. Description of the Related Art

As a storage medium for replacing a magnetic card, a card (also called IC card) incorporating a storage device or microcomputer is attracting attention. Power supply methods for saving information or executing operation include a method using electromotive force produced by electromagnetic induction, and a method of supplying power from a built-in battery. The former method is excellent because it eliminates the need to consider the battery life, but the information saved in the IC card cannot be read without a reader/writer. If a display unit such as liquid crystal panel is used, an internal battery is needed. By combining the two power supply methods, power can be supplied stably, and the IC card can be used in multiple functions.

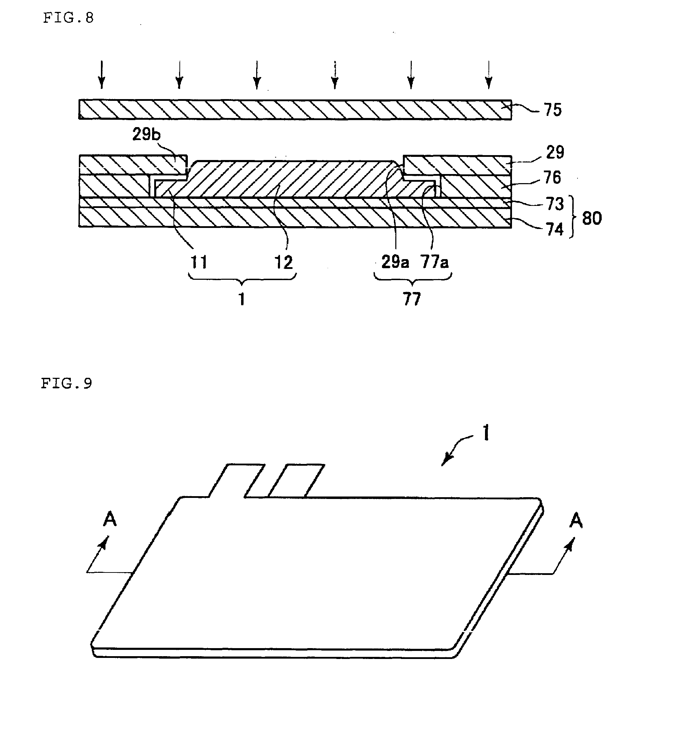

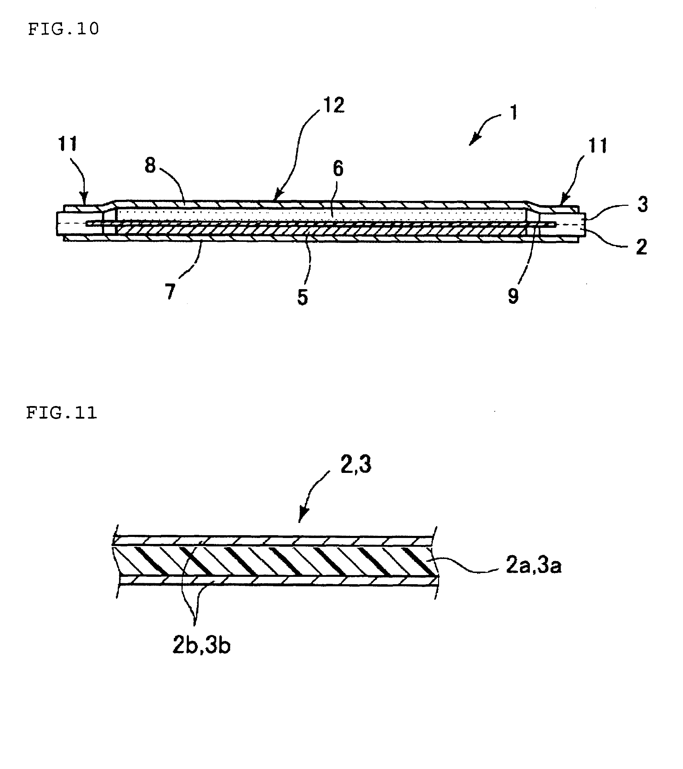

The battery built into the IC card must be thin. For example, a thin type lithium primary cell 1 shown in Fig. 9 and Fig. 10 has an electrode container composed of metal current collectors 7, 8 and resin-made frame sheet members 2, 3. The container is partitioned by a separator 9, and contains a positive electrode active material 6 and a negative electrode active material 5. To minimize transmission of moisture into the interior of the battery, the thickness of the frame sheet members 2, 3 is adjusted to be minimum. As a result, the main body 12 surrounded by an outer shell 11 of the battery (also referred to as the seal section 11) is shaped upwardly like a trapezoidal form.

The manufacturing method of the IC card generally comprises heating and laminating a plurality of resin sheets. More particularly, a core sheet having penetration holes is overlaid on an inner sheet for supporting internal components such as a battery and an IC module, and a cavity for containing the battery or containing the IC is formed, and oversheets are laminated from above and beneath, and integrally heated and laminated (thermally compressed).

Japanese patent unexamined publication No. H5-266268 and Japanese patent unexamined publication No. H10-024685 disclose such prior art methods.

In this heating and laminating process, excessive pressure may be applied to the battery causing break down of the seal, and the electrode active material may leak out. Such inconvenience is likely to occur in a battery such as a thin type battery 1 shown in Fig. 9 where the thickly formed portion is weak to pressure. In the heating and laminating process of the IC card, the compression conditions are set at lower temperature and lower pressure than in a conventional manufacturing method of a magnetic card, but it is difficult to prevent breakdown of the seal of the battery completely only by adjustment of the compression conditions.

Since the IC card is commonly carried around in a wallet, the same seal breakdown as in manufacture may occur. Such a problem cannot be avoided only by adjustment of the compression conditions in the heating and laminating process.

In the case of a battery not having a hard container such as a coin type battery, the battery changes shape significantly due to movement of active material from one electrode to the other. Over a long period of use of the IC card, it is feared that the battery shape change may appear on the IC card surface. Although this is not a serious problem so far as the IC card function is concerned, the appearance may nevertheless be impaired. Hence, there is a demand for a battery built-in type IC in which shape changes due to battery shape changes are small.

For example, in the lithium primary cell having the configuration as shown in Fig. 9 and Fig. 10, as the discharge progresses, the thickness of the battery decreases. As a result, though originally firmly fixed in the IC card at the time of manufacture, the battery may gradually become loose. Looseness of the battery in the card is disadvantageous because of the resulting poor connection reliability between the card side terminal and the battery terminal.

In the light of the above problems, it is an object of the invention to provide a battery built-in type card which alleviate seal breakdown of the battery during use. It is another object to provide a manufacturing method of a battery built-in type card alleviating seal breakdown of the battery in a heating and laminating process as well as during use. It is a further object to provide a battery built-in type card which is excellent in appearance and exhibits minimal shape change due to battery shape change, and its manufacturing method. It is another object to provide a battery built-in type card having the battery firmly fixed in the card from start until end of use, and its manufacturing method. It is a still further object to provide a thin type battery preferably usable in these cards.

### SUMMARY OF THE INVENTION

To solve the problems, a first aspect of the invention relates to a card comprising a thin plate battery the inside of which is kept airtight by a seal section to which a resin-made frame sheet member is adhered, the thickness of the seal section being smaller than the thickness of a main body of the thin plate battery enclosed by the seal section, the card including a core sheet having a cavity and an upper sheet laminated so as to form a lid on the cavity, wherein a spacer is disposed between the seal section of the thin type battery and the upper sheet for tightly adhering said seal section and the upper sheet.

According to the invention, since the spacer is inserted between the seal section of thin type battery and the upper sheet, in actual use, the pressure applied to the card surface distributes widely to the seal section of the battery by way of the spacer, and concentration of applied pressure on the main body is prevented. The seal section is far stronger than the main body against pressure in the thickness direction. Therefore, inconvenience of leakage from the electrode active material can be prevented. At the same time, in a laminating step in manufacture, breakage of the battery seal can be prevented. Since the spacer is present between the seal section of battery and oversheet, the battery is firmly fixed in the card.

A method of manufacturing the IC card is as follows. That is, the manufacturing method of a card comprises a battery fabricating step of fabricating a thin plate battery the inside of which is kept airtight by a seal section to which a resin-made frame sheet member is adhered, the thickness of the seal section being smaller than the thickness of a main body (12) of the thin plate battery enclosed by the seal section, a battery accommodating step of accommodating the thin type battery in a cavity, said step including forming said cavity for accommodating the battery by overlaying a lower sheet and a core sheet having a penetration hole, and disposing an upper sheet on the cavity, and a laminating step of pressing the core sheet, lower sheet, and upper sheet from above and beneath and adhering them mutually, wherein a preliminarily formed spacer is inserted between the seal section of the thin type battery and the upper sheet, and the laminating step is executed so that the pressing force is applied to the seal section by way of the spacer.

According to this method of the invention, in the laminating step, the pressure from the press machine is distributed to the seal section by way of the spacer, and concentration of pressing force on the main body is prevented. The seal section is far stronger than the main body against pressure in thickness direction. Therefore, inconvenience of leakage from the electrode active material can be prevented. At the same time, in actual use, breakage of seal can be prevented. Since the spacer is present between the seal section of battery and oversheet, the battery is firmly fixed in the card.

As a method of obtaining same effects, meanwhile, it may be considered to inject fused resin after accommodating the battery in the cavity, but in such method the number of steps would be increased, and an expensive die and injection forming apparatus would be required and the equipment cost would be higher. It is hence preferred to insert a preliminarily formed spacer, as in the invention.

The spacer may be preliminarily fitted to the thin type battery. That is, it is the main feature of the thin type battery for card of the invention that it is a thin type battery used in a card formed by mutually laminating plural layers of resin sheet, having a seal section to which a resin-made frame sheet member is adhered, and the thickness of the seal section is smaller than the thickness of the main body enclosed by the seal section, a spacer is mounted on the principal plane of the seal, and the total thickness of the seal section and spacer is adjusted to be more than the maximum thickness of the main body. It hence presents a battery built-in type card strongly resisting breaking down of the seal of the battery in actual use. In the laminating step in card manufacture, seal breakdown of battery can be effectively suppressed.

To solve the problems, a second aspect of the invention relates to a card comprising a thin plate battery the inside of which is kept airtight by a seal section to which a resin-made frame sheet member is adhered, the thickness of the seal section being smaller than the thickness of a main body of the thin plate battery enclosed by the seal section, the card including a core sheet having a cavity and an upper sheet laminated on the cavity, wherein a spacer of sheet form having rubber elasticity and of a size to fit within the cavity is inserted to fit tightly between the thin type battery and the upper sheet.

According to the invention, the card can be heated and laminated so that the spacer may be deformed elastically. As a result, static load is always applied to the thin type battery, and it is firmly fixed in the card. When the battery is consumed and the battery thickness decreases, the spacer restores elastically to follow up the thickness changes, and it hence suppresses occurrence of inconvenience such as the transfer of thickness reduction of the battery onto the card surface or looseness of the battery within the card. Therefore, the battery is fixed firmly in the card from start until end of use, and a card of excellent appearance is realized. Moreover, the soft elastic sheet contributes to uniform distribution within the plane of the pressure applied to the main body of the battery, and it is expected to suppress seal breakdown of battery in a heating and laminating step.

A manufacturing method of the IC card is as follows. That is, the manufacturing method of card comprises the battery fabricating step, battery accommodating step, and a laminating step as mentioned above, in which a spacer of sheet form having rubber elasticity preliminarily formed in size to fit within the cavity is inserted to fit tightly between the thin type battery and the upper sheet, and the laminating step is executed.

According to the method of the invention, the card can be laminated so that the spacer may be deformed elastically. As a result, static load is always applied to the thin type battery, and it is firmly fixed in the card. Moreover, the soft elastic sheet contributes to uniform distribution within the plane of the pressure applied to the main body of the battery, and it is expected to suppress seal breakdown of battery in heating and laminating step.

### BRIEF DESCRIPTION OF THE DRAWINGS

Fig. 1 is a sectional schematic view of a first embodiment of an IC card according to the invention.
Fig. 2 is a block diagram of the IC card.
Fig. 3 is a partial magnified view of Fig. 1.
Fig. 4 is a sectional schematic view of a deformed example of a spacer.
Fig. 5 is a perspective exploded view explaining a manufacturing procedure of an IC card.
Fig. 6 is a sectional schematic view of a second embodiment of an IC card of the invention.
Fig. 7 is a sectional schematic view of a third embodiment of an IC card of the invention.
Fig. 8 is a sectional schematic view showing a state before assembly of the IC card in third embodiment.
Fig. 9 is a perspective view of a thin type battery.
Fig. 10 is a sectional view of the thin type battery.
Fig. 11 is a magnified sectional view of the composition of a frame type sheet member.
Fig. 12A to Fig. 12D is a diagram illustrating a manufacturing process of a thin type battery.
Fig. 13 is a perspective view of a thin type battery for IC card.
Fig. 14 is a perspective view of a thin type battery for IC card.

### DETAILED DESCRIPTION OF THE INVENTION

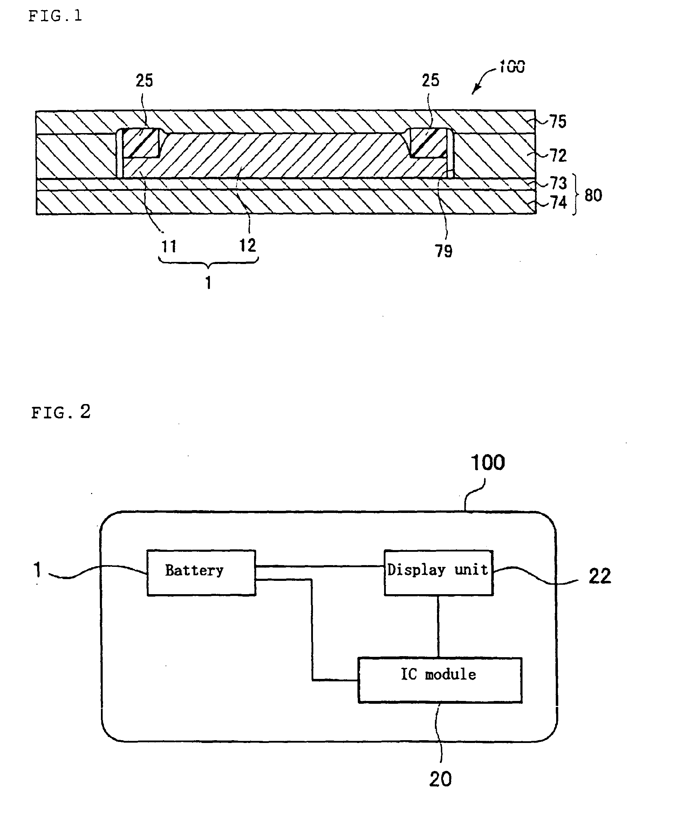

Referring now to the accompanying drawings, preferred embodiments of the invention are described below. Fig. 1 is a sectional schematic view of an IC card 100 of the invention. Fig. 2 is a block diagram of the IC card 100. The IC card 100 comprises an IC module 20, a thin type battery 1, a display unit 22 and other elements. The IC module 20 is an assembled module of electronic components such as an IC chip and a capacitor. The thin type battery 1 is for supplying electric power to the IC module 20 and display unit 22. Further, an antenna coil unit may be provided for supplying electric power by electromagnetic induction, or transmission or reception of data (not shown).

As shown in Fig. 1, the IC card 100 is formed by laminating first oversheet 74, inner sheet 73, core sheet 72, and second oversheet 75 in this sequence, and they are integrally heated and laminated. The core sheet 72 has a cavity 79 for accommodating the battery. The thin type battery 1 is accommodated in the cavity 79. The thin type battery 1 includes a seal section 11, and a main body 12 of greater thickness than the seal section 11. In the card thickness direction, a spacer 25 is inserted between the seal section 11 and the second over sheet 75 so as to form a tight fit.

The inner sheet 73 supports the thin type battery 1, IC module 20, and display unit 22, and a circuit for supplying electric power and transmitting signal is provided. The inner sheet 73 and first oversheet 74 may be integrated before manufacture of the IC card.

Resin materials for forming oversheets 74, 75, core sheet 72, and inner sheet 73 preferably include PVC (polyvinyl chloride), PET-G (registered trademark of Eastman Chemicals of United States), biodegradable resin, PET (polyethylene terephthalate), and other thermoplastic resins. PVC is a fusible resin at 140 to 150 deg. C, and it is generally used as card substrate. PET-G is a noncrystalline polyester resin fusible like PVC. The fusing temperature is 120 to 130 deg. C, lower than in PVC, and it is excellent in bending and twisting durability, and the combustion generation gas is clean, among other excellent features. Biodegradable resin is relatively low in fusing temperature, that is, 130 to 140 deg. C, but is free from generation of harmful gas in incineration treatment like PET-G. Further, by the function of microorganisms, it is decomposed into water and carbon dioxide, and it can therefore safely be disposed of by land filling. PET, which is crystalline resin, is not thermally fusible, and it needs to be used together with adhesive such as hot-melt adhesive. More specifically, hot-melt adhesive layer may be thinly formed on one side or both sides of PET sheet. Hot-melt adhesive is mainly composed of polyvinyl acetate, acrylic resin, ethylene-vinyl acetate copolymer, and other thermoplastic resin. To these resins, further, proper additives may be added, such as pigment and flame retardant.

The thin type battery 1 is now described. Fig. 9 is a perspective view of thin type battery 1, and Fig. 10 is a sectional view A-A in Fig. 9. As shown in Fig. 9 and Fig. 10, the thin type battery 1 has a square shape, and includes a separator 9, a positive electrode active material 6 and a negative electrode active material 5 mutually separated by the separator 9, a pair of window frames 2, 3 (frame type sheet members) enclosing these active materials 5, 6 in the principal plane of the separator 9, and a pair of current collectors 7, 8 which together with the separator 9 enclose the active materials 5, 6. Current collectors 7, 8 serve also as exterior members of the thin type battery 1. The window frames 2, 3 are adhered to each other, and to respective ones of the current collectors 7, 8 of the positive electrode and negative electrode at the respective electrode sides, and a seal section 11 is formed to keep the battery inside airtight. The peripheral edge of the separator 9 is held between the pair of window frames 2, 3. The inner portion surrounded by the seal section 11 is the main body 12 of the battery. The first side (negative electrode side) of the thin type battery 1 is substantially flush with the seal section 11 and main body 12, and the second side (positive electrode side) forms a trapezoidal shape.

As shown in a magnified sectional view in Fig. 11, the window frames 2, 3 are composed of hot-melt type adhesive layers 2b, 3b of ethylene vinyl acetate (EVA), ethylene-methacrylic acid copolymer (EMAA), acid denatured polyethylene (PE-a), acid denatured polypropylene (PP-a) or the like, formed at both sides of base materials 2a, 3a composed of thermoplastic resin such as polyethylene (PE), polypropylene (PP), or polyethylene terephthalate (PET). In this embodiment, a three-layer resin sheet having biaxially drawn polypropylene (OPP) enclosed by ethylene-methacrylic acid copolymer is used in window frames 2, 3. In the case of thin type battery used in IC card of ISO standard (ISO/IEC 7810), the thickness of window frames 2, 3 should be, for example, 90 to 150 um. The window frames 2, 3 and current collectors 7, 8 are adhered, and the window frames 2, 3 and separator 9 are adhered, by way of the adhesive layers 2b, 3b.

In the negative electrode active material 5 (first electrode active material), a lithium thin piece made of lithium metal may be used. That is, the thin type battery 1 is formed as a lithium primary battery, the lithium metal is either lithium or lithium alloy. The thickness of the lithium thin piece is, for example, 50 to 150 um in the case of a thin type battery used in an IC card of ISO standard. In the positive electrode active material 6 (second electrode active material), for example, any material containing 60 to 70 mass % of manganese dioxide powder, 1 to 5 mass % of carbon, and 25 to 35 mass % of electrolyte may be preferably used.

Electrolyte solution is composed of lithium salt such as lithium perchlorate (LiC10₄) or lithium trifurate (LiCF₃SO₃) dissolved in an organic solvent such as dimethoxy ethane (DME), ethylene carbonate (EC) or propylene carbonate (PC). The separator 9 is a thin film member capable of isolating the positive electrode and negative electrode, and sufficiently permeable to the electrolyte solution. Specifically, the separator 9 is a porous, multilayer sheet piece composed of resin such as polyethylene or polypropylene. Its thickness is, for example, 20 to 60 um in the case of a thin type battery used in IC card of ISO standard.

The material for current collectors 7, 8 is preferably any one selected from the group of conductive metals consisting of copper, copper alloy, stainless steel, aluminum, nickel, and nickel alloy. In particular, stainless steel is preferred because it is excellent in processability, corrosion resistance, and economy. Specifically, it is recommended to use SUS301, SUS304, SUS316, SUS316L as representative examples of austenitic stainless steel, or SUS631 as representative example of precipitation hardening stainless steel.

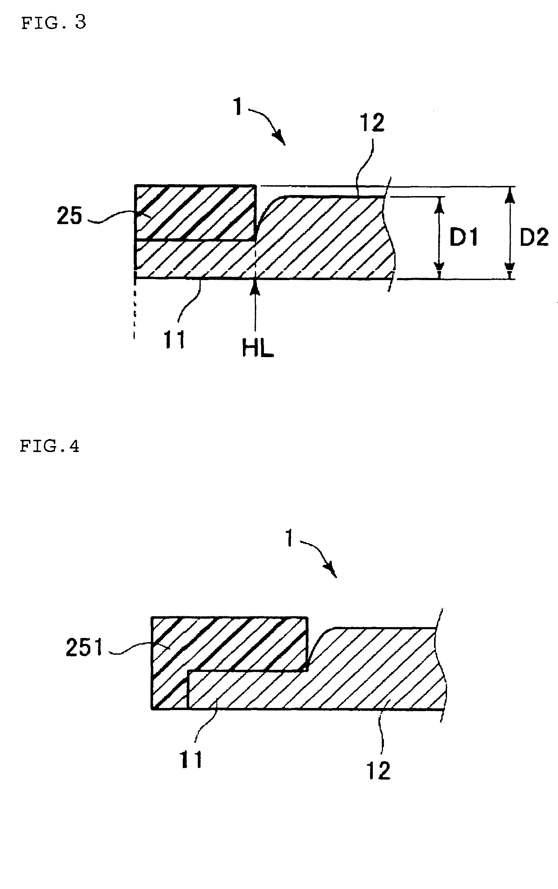

Returning to Fig. 1, the spacer 25 is explained. The spacer 25 has a function of suppressing concentration of pressure applied to the surface of the IC card 100 on the main body 12 of the thin type battery 1. The seal section 11 of the thin type battery 1 is a portion not supporting the electrode active material, and it is strong and resistant to the pressure from the thickness direction. Fig. 3 is a partial magnified view of Fig. 1. As shown in Fig. 3, total thickness D₂ of seal section 11 of thin type battery 1 and spacer 25 is adjusted to be more than the maximum thickness D₁ of the main body 12 of the thin type battery 1. As a result, when a surface pressure is applied to the second oversheet 75 of the IC card 100, pressure is applied predominantly on the seal section 11 of the thin type battery 1, and a sufficient breakdown preventive effect of seal section 11 is obtained. Such dimensional adjustment of the spacer 25, could be achieved though with some difficulty by the method of filling the cavity 79 with resin; more preferably a preliminarily formed spacer 25 is used.

The spacer 25 can be mainly composed of resin hard-cured by heating more than the resin for composing the oversheets 74, 75 and core sheet 72; this means that the spacer is less easily softened by heating than the upper sheet. Thus, in the heating and laminating step described below, melting or softening of the spacer 25 can be prevented. However, when the oversheets 74, 75 and core sheet 72 are composed of PET, hot-melt adhesive layer is provided between sheets. A heating temperature in the heating and laminating step is determined by the softening temperature of the hot-melt adhesive layer. Hence, the spacer 25 is made of a resin hard-cured than the hot-melt adhesive. Specifically, when using a hot-melt adhesive of which softening temperature is less than 150 deg. C, one type selected from the resin group consisting of polypropylene, PET, polyimide, polycarbonate, epoxy resin, ABS (acrylonitrile-butadiene-styrene copolymer), PVC and PEN (polyethylene naphthalate) can be processed into a film, and used as spacer 25. Softening temperature of resin is nearly equal to the glass transition temperature.

The spacer 25 may be also composed mainly of a high molecular material having rubber elasticity. Specifically, a silicone resin or other elastomer not melting at the heating and laminating temperature used in manufacture of IC card 100 can be employed. When the spacer 25 has rubber elasticity, the following dominant effects are obtained. In the lithium primary battery (thin type battery 1) shown in Fig. 9 and Fig. 10, lithium moves to the positive electrode side by discharge, but at this time the thickness of battery tends to decrease gradually. As a result, once firmly fixed at the time of manufacture of IC card 100, the thin type battery 1 may be gradually loosened in the IC card. However, by allowing the spacer 25 to deform elastically at the time of manufacture, if the thickness of the thin type battery 1 decreases, the decrement can be canceled by the gradual elastic restoration of the spacer 25. Hence, it prevents loosening of the thin type battery 1 in the card, or transfer of shape change of thin type battery 1 on the card surface. Further, when a static load in the thickness direction is always applied to the thin type battery 1, mutual contact tightness of the electrode active materials, separator and metal current collectors is enhanced, and it is advantageous from the viewpoint of decrease of internal resistance.

Preferably, the spacer 25 should have a frame shape along the seal section 11 of the thin type battery 1. For example, it is possible to install the spacer only along two sides of the square-shaped thin type battery cell 1, but as in this embodiment by disposing the spacer 25 so as to surround the main body 12 of the battery 1, the significant effects explained so far can be exhibited to the maximum extent.

As shown in Fig. 3, the spacer 25 may be adjusted in dimensions so that its inner peripheral edge may coincide with boundary HL of seal section 11 of the thin type battery 1 and main body 12. In this configuration, since the spacer 25 does not interfere with the main body 12, damage to the main body 12 may be more effectively reduced. The outer peripheral edge of the spacer 25 should coincide with the outer peripheral edge of the thin type battery 1. Or in a range set within the cavity 79 of the IC card 100, it may be extended outward over the outer peripheral edge of the thin type battery 1. For example, spacer 251 shown in Fig. 4 is extended outward over the outer peripheral edge of the seal section 11, and is formed in an L-section in a form along the side face of the seal section 11. As a result, a greater fixing effect is expected.

The main body 12 of the thin type battery 1 is substantially flush with the seal section 11 of the first side (negative electrode side), and tightly contacts with the inner sheet 73. At the second side (positive electrode side) too, the main body 12 contacts tightly with the second oversheet 75.

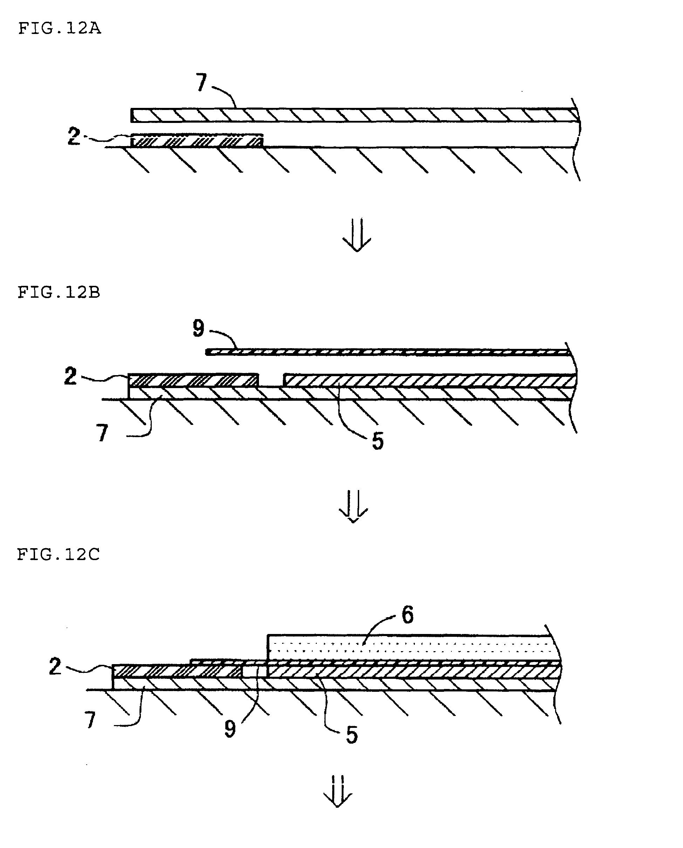

The IC card 100 can be manufactured in the following procedure. Prior to this, the fabricating process of thin type battery 1 is explained by referring to the process explanatory chart in Fig. 12A to Fig. 12D. The current collector 7 at the negative electrode side is brought into contact with the surface of the window frame 2, and the adhesive layer of the window frame 2 is fused by an ultrasonic fusion method or a thermal fusion method, and the current collector 7 is adhered to the window frame 2 (Fig. 12A). The assembly of the window frame 2 and current collector 7 is turned over, and a lithium thin plate 5 is mounted on the current collector 7 as a negative electrode material. From above the lithium thin plate 5, a separator 9 is placed so that its peripheral edge may contact with the surface of the window frame 2 (Fig. 12B). At this time, to prevent deviation of position of separator 9, it is preferred to apply adhesive or the like preliminarily to the separator 9 or window frame 2.

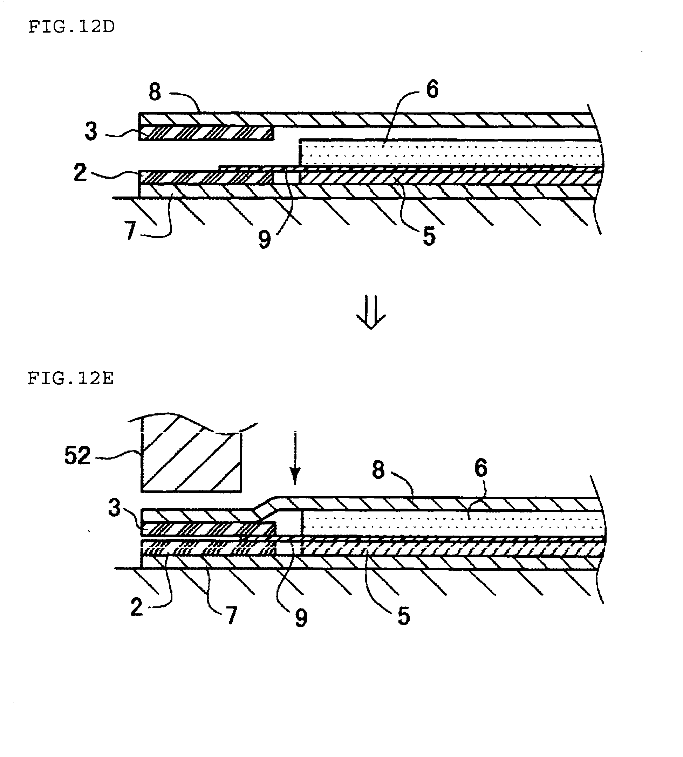

By thick film printing method using metal mask, slurry 6 containing MnO₂ is printed on the principal plane of the separator 9 as a positive electrode active material (Fig. 12C). The current collector 8 of positive electrode side preliminarily bonded to the window frame 3 is put on to cover the slurry layer 6 (Fig. 12D). Finally in vacuum atmosphere or while sucking air from the window frames 2, 3, an ultrasonic horn 52 is brought into contact with the current collector 8, and the window frames 2, 3 are fused to each other, thereby fabricating a thin type battery 1 (Fig. 12E).

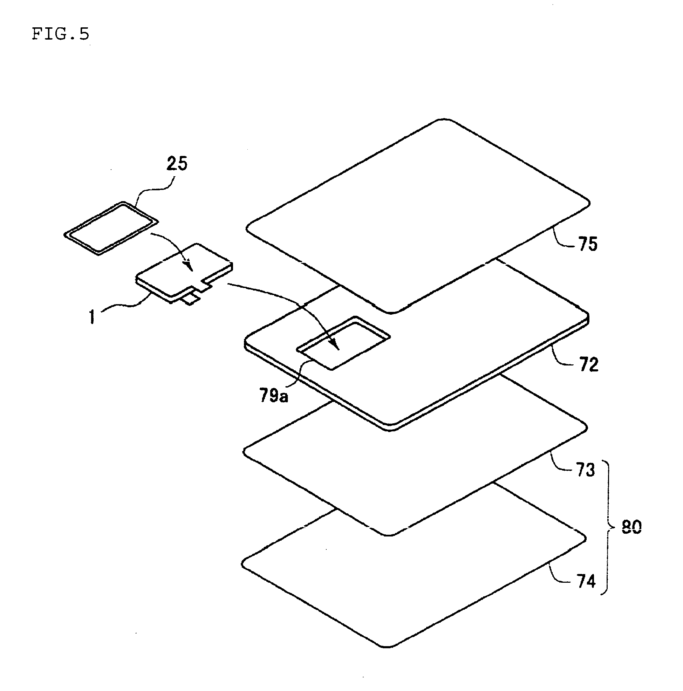

While fabricating the thin type battery 1, as shown in Fig. 5, an inner sheet 73 having IC module 20, display unit 22 and circuit, a core sheet 72 having penetration hole 79a, oversheets 75, 74, and spacer 25 are manufactured. The penetration hole 79a of the core sheet 72 can be formed by blanking or other process. The spacer 25 is adjusted to a size so as to just fit to the penetration hole 79a of the core sheet 72. Next, so as to plug the penetration hole 79a of the core sheet 72 from one side, a lower sheet 80 composed of inner sheet 73 and first oversheet 74 is overlaid on the core sheet 72, and a cavity 79 for accommodating the battery is formed, and the thin type battery 1 is accommodated in this cavity 79. The spacer 25 is put on the thin type battery 1, and a second oversheet 75 is placed so as to put a lid on the cavity 79 (battery accommodating step). In Fig. 5, for the sake of simplicity, the IC module 20, display unit 22 and accommodating section are omitted.

In this way, after arranging the thin type battery 1 and spacer 25, and matching with the sheets, the core sheet 72, inner sheet 73, and oversheets 75, 74 are pressed while heating from above and beneath by a press machine, and the sheets are mutually adhered (heating and laminating step). This heating and laminating step can be executed while adjusting to the temperature range not to soften or fuse the spacer 25. The heating and laminating step can also be executed in a vacuum atmosphere. In this manner, the IC card 100 shown in Fig. 1 can be obtained.

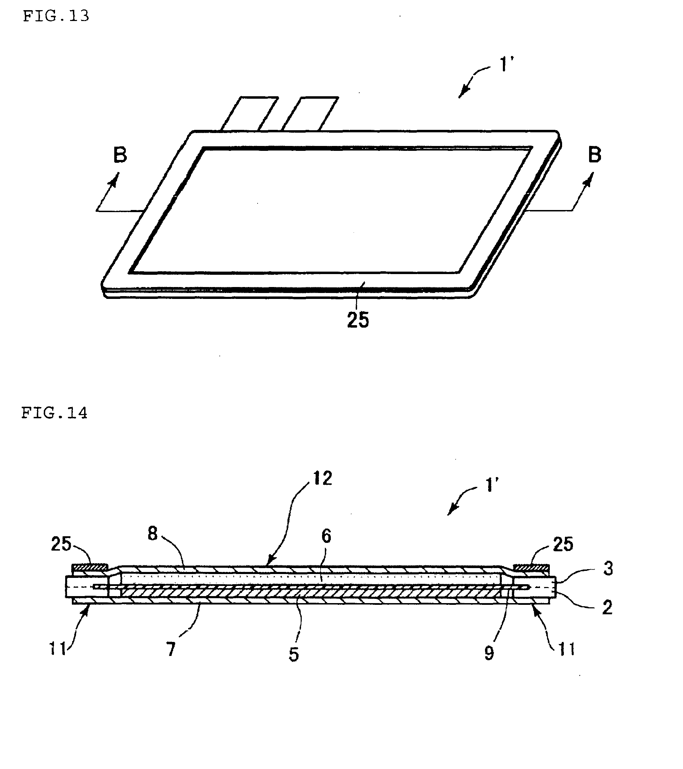

Alternatively, a multiple-piece IC card work mutually linking multiple IC cards may be manufactured, blanked by punch or the like, and separated into individual IC cards 100. According to this method, matching of resin sheets is easy, it is not necessary to handle components individually, and a high productivity is expected. As shown in Fig. 13 and Fig. 14, meanwhile, by preliminarily adhering the spacer 25 to the seal section 11, a problem of deviation of position of spacer 25 in the battery accommodating step and the heating and laminating step can be avoided, and a favorable thin film battery 1' for IC card can be presented. That is, the assembling step of spacer 25 can be incorporated in the assembling process of thin type battery 1 shown in Fig. 12A to Fig. 12E. In this case, as explained in Fig. 3, preferably, the thickness of the spacer 25 should be adjusted so that the total thickness of the seal section 11 and spacer 25 may be more than the total thickness of the main body 12.

### (Second embodiment)

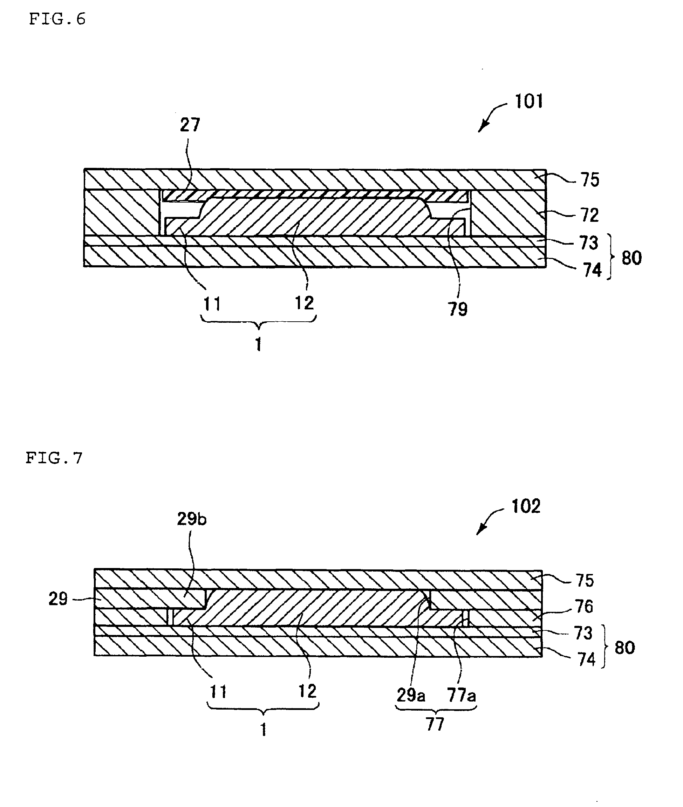

An IC card 101 shown in Fig. 6 is an example of a spacer 27 of sheet form having rubber elasticity and adjusted in size so as to fit just in a cavity 79, being inserted to fit tightly between and in contact with a main body 12 of a thin type battery 1 and a second oversheet 72. The size of the spacer 27 is preferably adjusted to contact with the entire surface of the main body 12. The constituent material for the spacer 27 is preferably an elastomer having a proper heat resistance, such as silicone resin. Heat resistance means to allow mutual adhesion of oversheets 74, 75, inner sheet 73, and core sheet 72, and not to allow fusion at the heating and laminating temperature for obtaining IC card 101. The thin type battery 1, oversheets 74, 75, inner sheet 73, and core sheet 72 are the same as described above.

The heating and laminating step for fabricating the IC card 101 may preferably be done in a temperature range for allowing mutual adhesion of oversheets 74, 75, inner sheet 73, and core sheet 72, and not allowing fusion of spacer 27. The spacer 27 is deformed (compressed) elastically, and applies static load to the thin type battery 1. A soft spacer 27 absorbs surface undulations of the main body 12 of the thin type battery 1, and contributes to prevention of seal breakdown. The spacer 27 may be preliminarily fitted to the thin type battery 1.

### (Third embodiment)

In an IC card 102 shown in Fig. 7, a spacer sheet 29 having an opening 29a so as to allow entry of the main body 12 of thin type battery 1 and not to allow entry of seal section 11 is inserted between a second oversheet 75 and a core sheet 76. The spacer sheet 29 is composed as a sheet member to be integrally adhered to the second oversheet 75 and core sheet 76. An opening peripheral edge 29b of the spacer sheet 29 is adhered to the seal section 11 of the thin type battery 1 at the first side, and to the oversheet 75 at the second side. In other words, a stepped cavity is formed by the core sheet 76 and spacer sheet 29, and the thin type battery 1 is accommodated in the stepped cavity. The thin type battery 1, oversheets 74, 75, and inner sheet 73 are the same as discussed above. The core sheet 76 is thinner than the thin type battery 1 in order to allow for insertion of the spacer 29.

The spacer sheet 29 can be composed of the same resin material as the oversheets 74, 75, inner sheet 73, and core sheet 76, specifically, PVC, PET-G, biodegradable resin, PET, and other thermoplastic resin as mentioned above. That is, it also serves as the spacer contributing to prevention of seal breakdown of the thin type battery 1 as well as the base material of IC card 102.

Fig. 8 is a sectional schematic view before the start of the heating and laminating step for fabricating the IC card 102 in Fig. 7. The thickness of core sheet 76 is adjusted to be larger than the thickness of seal section 11 of thin type battery 1. The total thickness of core sheet 76 and spacer sheet 29 is larger than the maximum thickness of the thin type battery 1. The core sheet 76 has an opening 77a of a size sufficient for inserting the thin type battery 1. The spacer sheet 29 has an opening 29a smaller than the opening 77a of the core sheet 76. The thin type battery 1 is accommodated in a stepped cavity 77 formed by blocking these openings 29a, 77a from one side by the lower sheet 80. There is a slight gap between the opening peripheral edge 29b of the spacer sheet 29 and the seal section 11 of the thin type battery 1, but as the heating and laminating step proceeds, each sheet is softened gradually, and the thickness decreases. As a result, the opening peripheral edge 29b of the spacer 29 is gradually applied on the seal section 11 of the thin type battery 1, and pressure is applied to the seal section 11, and concentration of pressure on the main body 12 of the thin type battery 1 is prevented. Hence, leakage of electrode active material can be prevented.

In the specification, by "mainly," it means that the component in question is contained most by mass %. "Vacuum" refers to a state evacuated and reduced in pressure from the atmospheric pressure. The card having built in storage device or microcomputer is particularly referred to as an IC card. However this invention is also applicable to a card incorporating a thin type battery without also incorporating a storage device or microcomputer.

## Claims

1. A card (100, 102) comprising a thin plate battery (1) the inside of which is kept airtight by a seal section (11) to which a resin-made frame sheet member (2, 3) is adhered, the thickness of the seal section (11) being smaller than the thickness of a main body (12) of the thin plate battery enclosed by the seal section (11), the card including a core sheet (72) having a cavity (79, 77) and an upper sheet (75) laminated so as to form a lid on the cavity (79, 77), wherein a spacer (25, 29) is disposed between the seal section (11) of the thin type battery (1) and the upper sheet (75) for tightly adhering said seal section and the upper sheet.

2. A card (100, 102) according to claim 1, wherein total thickness (D2) of the seal section (11) of thin type battery (1) and spacer (25, 29) is greater than the maximum thickness (D1) of the main body (12) of the thin type battery (1).

3. A card (100) according to claim 1 or claim 2, wherein the spacer (25) is mainly composed of a resin less likely to be softened by heating than the resin for composing the upper sheet (75) and/or the resin for composing the core sheet (72), or the thermofusible resin for adhering the upper sheet (75) and core sheet (72).

4. A card (100) according to claim 1 or claim 2, wherein the spacer (25) is composed of a high molecular material having rubber elasticity.

5. A card (100) according to any one of claims 1 to 4, wherein the spacer (25) has a frame shape conforming to the seal section (11) of the thin type battery (1).

6. A card (102) according to any one of claims 1 to 3, wherein the spacer (29) is a sheet member inserted between upper sheet (75) and core sheet (76) to be adhered integrally thereto, and has an opening (29a) of a size allowing entry therein of the main body (12) of thin type battery (1) and not allowing entry of the seal section (11).

7. A card (101) comprising a thin plate battery (1) the inside of which is kept airtight by a seal section (11) to which a resin-made frame sheet member (2, 3) is adhered, the thickness of the seal section (11) being smaller than the thickness of a main body (12) of the thin plate battery enclosed by the seal section (11), the card including a core sheet (72) having a cavity (79) and an upper sheet (75) laminated on the cavity (79), wherein a spacer (27) of sheet form having rubber elasticity and of a size to fit within the cavity (79) is inserted to fit tightly between the thin type battery (1) and the upper sheet (75).

8. A method of manufacturing a card (100, 102) comprising:
a battery fabricating step of fabricating a thin plate battery (1) the inside of which is kept airtight by a seal section (11) to which a resin-made frame sheet member (2, 3) is adhered, the thickness of the seal section (11) being smaller than the thickness of a main body (12) of the thin plate battery enclosed by the seal section (11),
a battery accommodating step of accommodating the thin type battery (1) in a cavity (79, 77), said step including forming said cavity (79, 77) for accommodating the battery by overlaying a lower sheet (80) and a core sheet (72, 76) having a penetration hole (79a, 77a), and disposing an upper sheet (75) on the cavity (79, 77), and
a laminating step of pressing the core sheet (72, 76), lower sheet (80), and upper sheet (75) from above and beneath and adhering them mutually,
wherein a preliminarily formed spacer (25, 29) is inserted between the seal section (11) of the thin type battery (1) and the upper sheet, and the laminating step is executed so that the pressing force is applied to the seal section (11) by way of the spacer (25, 29).

9. A method of manufacturing a card (100, 102) according to claim 8, wherein the total thickness D₂ of the seal section (11) of the thin type battery (1) and the spacer (25) is greater than the maximum thickness D₁ of the main body (12) of the thin type battery (1).

10. A method of manufacturing a card (100) according to claim 8 or claim 9, wherein the spacer (25) is mainly composed of a resin less likely to be softened by heating than the resin for composing the upper sheet (75) and/or the resin for composing the core sheet (72), or the thermofusible resin for adhering the upper sheet (75) and core sheet (72), and the laminating step is executed in a temperature range for adhering the upper sheet (75) and core sheet (72), but not fusing the spacer (25) .

11. A method of manufacturing a card (100) according to claim 8 or claim 9, wherein the spacer (25) is composed of a high molecular material having rubber elasticity.

12. A method of manufacturing a card (100) according to any one of claims 8 to 11, wherein the spacer has a frame shape conforming to the seal section (11) of thin type battery (1).

13. A method of manufacturing a card (102) according to any one of claims 8 to 10, wherein a sheet member having an opening (29a) of a size allowing entry of the main body (12) of the thin type battery (1) and not allowing entry of the seal section (11) is inserted between the upper sheet (75) and core sheet (76) as the spacer (29) to be adhered integrally thereto.

14. A method of manufacturing a card (101) comprising:
a battery fabricating step of fabricating a thin plate battery (1) the inside of which is kept airtight by a seal section (11) to which a resin-made frame sheet member (2, 3) is adhered, the thickness of the seal section (11) being smaller than the thickness of a main body (12) of the thin plate battery enclosed by the seal section (11),
a battery accommodating step of accommodating the thin type battery (1) in a cavity (79), said step including forming said cavity (79) for accommodating the battery by overlaying a lower sheet (80) and a core sheet (72) having a penetration hole (79a), and disposing an upper sheet (75) on the cavity (79), and
a laminating step of pressing and heating the core sheet (72), lower sheet (80), and upper sheet (75) from above and beneath and adhering them mutually,
wherein the laminating step is executed by inserting a spacer (27) of sheet form having rubber elasticity preliminarily formed in a size to fit within the cavity (79) between the thin type battery (1) and upper sheet (75) so as to be in tight contact with them both.

15. A thin type battery (1') for card, being a thin type battery (1') used in a card (100) formed by mutually laminating plural layers of resin sheet (72, 73, 74, 75), the battery having a seal section (11) to which a resin-made frame sheet member (2, 3) is adhered, with the thickness of the seal section (11) being smaller than the thickness of a main body (12) enclosed by the seal section (11), wherein a spacer (25) is mounted on a principal plane of the seal section (11), and the total thickness D₂ of the seal section (11) and the spacer (25) is greater than the maximum thickness D₁ of the main body (12).

16. A thin type battery (1') according to claim 15, wherein the spacer (25) is a resin-made sheet member having a frame shape conforming to the seal section (11).

17. A thin type battery (1') according to claim 15 or claim 16, being a lithium primary battery using lithium or lithium alloy as a negative electrode active material (5), and an oxide of a transition metal as a positive electrode active material (6).
